# EUROPEAN PATENT APPLICATION

(11) **EP 4 645 632 A1**
(43) Date of publication of application: **05.11.2025**
(21) Application number: 24173765.9
(22) Date of filing: 02.05.2024
(51) Int. Cl.: H02J 7/00, H02J 7/04, H02M 7/217

(54) **A BATTERY CHARGER DEVICE PROVIDING SUPPRESSION OF RIPPLE CURRENTS**

(71) Applicant: ALSTOM Holdings, 93400 Saint-Ouen-sur-Seine (FR)
(72) Inventor: Trollberg, Olle, 725 97 Västerås (SE); Mosskull, Henrik, 722 43 Västerås (SE); Ashok, Kanani, 722 22 Västerås (SE)
(74) Representative: Bjerkén Hynell KB

(57) **Abstract**

A battery charger device (2) for charging batteries in a battery module (4), comprising:
- a diode rectifier circuitry (6), configured to receive a three-phase supply voltage Us, to rectify said supply voltage, and to generate a DC voltage (8) in dependence thereto;
- a battery chopper circuitry (10), configured to receive said DC voltage (8), and to generate a charging DC voltage (12), applicable to be applied to said battery module (4) and to charge said batteries, in dependence of control ratio (CR) data of a control signal (14), and
- a battery charger control unit (16) comprising a main control module (18) that is configured to calculate and to generate a main control signal comprising main CR data (19), wherein said main control module (18) is configured to calculate said main CR data (19) such that said step-up chopper circuitry (10) is controlled to generate a charging DC voltage UB being, or being close to, said charging reference DC voltage UBref. The battery charger control unit (16) further comprises an estimation calculation module (24) configured to calculate estimated values (26) of the amplitude, phase, and frequency of a ripple on the DC voltage (8), based upon the frequency, and amplitude of said supply voltage Us, and to determine ripple CR data in dependence of said estimated values, and to determine ripple suppression CR data (30) being the ripple CR data but having an opposite phase as the ripple CR data. The battery charger control unit (16) is configured to determine a control signal (14) including said main CR data (19) combined with said ripple suppression CR data (30), where said ripple suppression CR data (30) being superimposed on said main CR data, and to apply said control signal (14) to said battery chopper circuitry (10).

## Description

### Technical field

The present disclosure relates to a battery charger device comprising suppression of ripple currents due to rectification harmonics.

### Background

The present disclosure relates to battery charger devices, in particular intended to charge lithium ion batteries, but also applicable to most batteries with low internal impedance. These batteries may e.g. be arranged in a vehicle, e.g. a car, a truck, or a rail-bound vehicle.

When charging a battery, a stable charging voltage and current is required at prescribed levels related to the type of battery. Thus, the requirements of battery charger devices are therefore to provide this, based upon an input AC supply source. This AC source is often a three-phase input supply voltage having a frequency of 50Hz, or 60Hz. A rectifier device is therefore required to perform the conversion from AC to DC. Although a DC level output from the rectifier device is obtained, a known problem is that some disturbances will remain, i.e. some variations of the DC level output. These disturbances are often called ripples. The ripple to be handled herein is caused in the diode rectifier unit, e.g. a 6-pulse diode rectifier, due to variations in the three-phase input supply voltage, regarding phase, frequency and amplitude. If 50Hz then a 300Hz ripple will emerge, and if 60Hz then a 360Hz ripple will emerge - being the 6^{th} harmonic overtone. Also, higher overtones will emerge, although having lower amplitudes. A three-phase system requires six diodes to make up the rectifier. This design is commonly referred to as a 6-pulse rectifier because it draws current from the AC source in six pulses.

The technical object lying behind the present invention relates to adapt a presently used battery charger for charging lithium ion batteries, and generally, for charging batteries with low internal impedance/resistance. Simulations indicate that the ripple current is large due to the low internal resistance of the batteries of this kind. A problem with ripple of charging voltage and current is that it will cause heat in the battery to be charged.

In the following, some patent documents will be identified and briefly discussed, where the above-discussed problem are addressed.

US2016268917 relates to a bidirectional power converter that can be used in an electric vehicle to perform AC to DC power conversion to charge electric vehicle's battery. A current reference generator can be configured to generate a target current reference, which may include a current ripple compensation component.

US2003/0102845 relates to a fast charger for high capacity batteries that comprises a rectified AC input of single or three phases. High ripple current capacitors are provided, and switch with a power switching circuit in a "buck" configuration into an inductor/capacitor output filter. Metallized film capacitors are employed, to minimize the rectified 360 Hz AC component filtering while providing transient switch protection and ripple current requirements for the buck regulator, to provide a high current fast charger with substantially improved power factor.

Thus, the object with the present invention is to reduce the battery current ripple in order to reduce the heat generated in the battery during charging, and without having to do significant hardware modifications, e.g. without having to include any additional sensors or add extra filter components.

### Summary

The above-mentioned objects are achieved by the present invention according to the independent claims.

Preferred embodiments are set forth in the dependent claims.

The problem addressed herein is likely relevant for any battery charger for batteries where a chopper circuitry fed by a rectified voltage is used to control the battery voltage, but is particularly suitable for charging batteries with low internal resistance, e.g. lithium ion batteries.

The battery charger device according to the present invention may be applied in various implementations, e.g. in auxiliary control system for traction converters for rail-bound vehicles.

According to the present invention, the effect of the rectification ripple on the battery voltage is suppressed by means of destructive interference. A similar ripple but opposite in phase is generated and added to the control signal, and the control induced ripple will then cancel the effect of the ripple from the rectification voltage. Adding an active control as described herein for suppressing the ripple, saves the cost and problems with redesigning the hardware and is hence a cheaper and potentially also a more effective way to reduce the ripple.

The solution according to the present invention is focused on getting rid of ripple of a specific frequency, and will remove the ripple at that frequency completely, not only reduce it, and thus will reduce the heat generated in the battery without causing heat issues in any other part.

The present invention is implemented by a software algorithm used to suppress voltage and current ripple in a battery charger device and DC supply preferably consisting of a three-phase rectifier in series with a DC/DC converter (i.e. the battery chopper circuitry). The battery charger device is fed from a three-phase voltage source. The three-phase voltage is rectified using a 6-pulse diode rectifier. This generates a DC supply voltage, but also generates rectification harmonics (6th, 12th, 18th etc.). For a 50Hz three-phase supply, there will be a relatively large 300Hz voltage ripple on the rectified voltage (360 Hz for a 60Hz system).

A battery chopper circuitry supplied by the rectification voltage is used to control the charging voltage and current to the battery. A simple chopper control algorithm will let the 300Hz ripple through to the high voltage side. In case of lithium ion batteries with low internal resistance, such a voltage ripple can lead to large 300 Hz ripple in the battery charging current. To avoid such issues, the battery charger device according to the present invention will provide an active control of the battery chopper circuitry to suppress the ripple. The control algorithm uses a model to calculate a control signal which when applied leads to destructive interference with the rectification ripple, hence attenuating the ripple amplitude in the battery voltage and battery current.

An adaptive method is applied herein and the adaptation works on the model of the system, and thus implicitly also on the control signal, based on the measured ripple in battery voltage or battery current until the ripple is suppressed. Phase and amplitude variations in the three-phase voltage supply also clearly affects the rectification ripple phase and amplitude and thus the ideal control signal for suppression.

For this reason, the control signal is based on measurements of the voltage of the three-phase supply. The frequency and amplitude of the supply voltage are obtained using e.g. a phase locked loop (PLL) and used as a feedforward when calculating the control signal for ripple suppression. This feedforward enables fast suppression of ripple even during transients on the supply side of the battery charger as the PLL can be tuned faster than the adaptation algorithm.

### Brief description of the drawings

Figure 1 is a schematic illustration of a battery charger device according to the present invention.
Figure 2 is a block diagram schematically illustrating a battery charger control unit of the battery charger device according to the present invention.
Figure 3 is a block diagram schematically illustrating embodiments of the battery charger device according to the present invention.
Figures 4 and 5 show various voltage signals of a battery charger device.

### Detailed description

The battery charger device, will now be described in detail with references to the appended figures. Throughout the figures the same, or similar, items have the same reference signs. Moreover, the items and the figures are not necessarily to scale, emphasis instead being placed upon illustrating the principles of the invention.

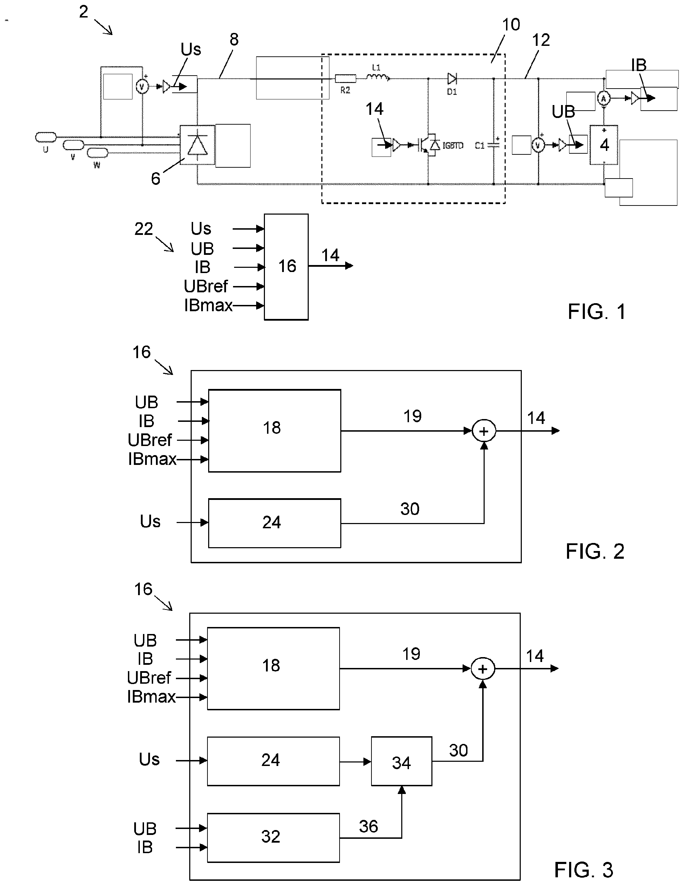

Figure 1 is a simplified circuit diagram of the battery charger device according to the present invention. In the illustrated circuitry, only items directly or indirectly involved in implementing the present invention are shown. Many further circuit parts are naturally involved in a real implementation.

With references to figures 1-3, the present invention relates to a battery charger device, designated generally as reference numeral 2, for efficiently charging batteries within a battery module 4. The device is particularly suitable for charging lithium ion batteries and is designed to optimize the charging process, reduce charging times, and improve the overall efficiency and lifespan of the batteries. The battery charger device features advanced control mechanisms to precisely regulate the charging voltage and current according to specific battery requirements.

The battery charger device comprises a diode rectifier circuitry 6, configured to receive a three-phase supply voltage Us, to rectify the supply voltage, and to generate a DC voltage 8 in dependence thereto. The diode rectifier circuitry is crucial for converting alternating current (AC) from the power supply into a direct current (DC). It is configured to accept an AC supply voltage Us, preferably a three-phase supply voltage, for increased efficiency and stability in the power conversion process. The rectifier circuitry outputs a DC voltage 8 the magnitude of which depends on the input AC voltage. Optionally, a transformer may be provided to prescale the three-phase input AC voltage to a suitable voltage.

In figure 1, the different input lines resulting in the three phases are denoted U, V, and W. The battery charger device disclosed herein will be described in connection with using a three-phase supply voltage. However, the invention is equally applicable for supply voltages having another number of phases. In the figure, for sake of simplification, Us is only denoted between two input lines, but is of course available between any two of the three different input lines.

The battery charger device 2, further comprises a battery chopper circuitry 10, configured to receive the DC voltage 8, and to generate a charging DC voltage 12, having a voltage UB, and a current IB, applicable to be applied to battery module 4 and to charge the batteries, in dependence of control ratio (CR) data of a control signal 14. The control signal 14 will be a PWM where the on and off times are determined by the CR and switching frequency.

Thus, following the diode rectifier, the battery chopper circuitry receives the rectified DC voltage 8. It is tasked with converting this DC voltage into a finely controlled charging DC voltage 12, characterized by specific voltage UB and current IB levels. These levels are adjusted in response to control ratio CR data from a control signal 14, ensuring that the output voltage and current are ideal for the battery module being charged.

Furthermore, a battery charger control unit 16 is provided, comprising (see figure 2) a main control module 18 that is configured to calculate and to generate a main control signal comprising main CR data 19.

The battery charger control unit 16 is configured to receive measurement values 22 representing at least the supply voltage Us, the charging DC voltage UB, the charging current IB, and a charging reference DC voltage UBref, and a maximum charging current IBmax, being the target voltage value and the maximum current value, respectively, of the batteries to be charged.

In the circuit illustrated in figure 1, voltage is conventionally measured by a voltage measurement unit denoted with an encircled "V", and current is conventionally measured by a current measurement unit denoted with an encircled "A".

The main control module 18 is configured to calculate the main CR data 19 such that the battery chopper circuitry 10 is controlled to generate a charging DC voltage UB being, or being close to, the charging reference DC voltage UBref.

The battery charger control unit 16 (see the block diagram in figure 2) further comprises an estimation calculation module 24 configured to calculate estimated values of the amplitude, phase, and frequency of a ripple on the DC voltage 8, where the ripple being a disturbance superimposed on the DC voltage 8. Ripples are disturbances that can adversely affect battery charging by introducing noise and inefficiencies.

The calculations are based upon the frequency, and amplitude of the supply voltage Us. Preferably, the calculations are performed by a phase-locked loop.

The estimation calculation module 24 is further configured to determine ripple CR data in dependence of the estimated values, and to determine ripple suppression CR data 30 being the ripple CR data but having an opposite phase as the ripple CR data.

The battery charger control unit 16 is configured to determine a control signal 14 including the main CR data 19 combined with the ripple suppression CR data 30, where the ripple suppression CR data 30 being superimposed on the main CR data, and to apply the control signal 14 to the battery chopper circuitry 10. This suppression data is thus combined with the main CR data to mitigate the effects of the ripple, ensuring a stable and consistent charging process. In figure 2, the combination of the main CR data 19 and the ripple suppression CR data 30 is illustrated by a "+"-sign where the data is added together.

The control signal 14 comprises a control ratio (CR) data to be applied to pulse width modulate the battery chopper circuitry 10 for providing the required voltage level, i.e. the voltage level being UBref.

The operation of the battery charger device involves several integrated processes controlled by the battery charger control unit 16. By analysing the input parameters and continuously monitoring the output, the control unit dynamically adjusts the control signals applied to the battery chopper circuitry. This dynamic adjustment is based on realtime calculations of both the main and ripple control ratios, facilitating optimal charging conditions and enhancing battery efficiency and safety.

The combination of the main CR data with the ripple suppression CR data in the control signal ensures that the charging voltage remains stable and close to the desired reference, despite any fluctuations in the supply voltage or inherent instabilities in the system. This technique significantly improves the reliability and effectiveness of the battery charging process, particularly for high-demand applications such as electric vehicles and large-scale energy storage systems.

This invention provides a robust solution for battery charging applications, particularly suited to the demands of lithium ion batteries. The innovative use of control technologies to counteract voltage ripple and other disturbances ensures that batteries are charged quickly and efficiently, promoting longer life and greater reliability.

In the main control module 18 provided in the battery charger control unit 16 according to the present invention, the battery voltage UB is controlled in relation to a reference UBref, e.g. by means of an integral controller. If the battery-voltage is too low, the controller will increase the control ratio until the voltage reach the reference. There is also a current limitation, IBmax. This will act on the battery voltage reference UBref such that if the current exceed a given limit IBmax, the battery voltage reference is reduced until the current falls below the limit.

Thus, the main control module 18 will provide the "normal" control of the DC level. According to the present invention, the estimation calculation module is included, and preferably also an adaptation calculation module, which will be further discussed below. This addition has a zero bias, so it does not affect the nominal battery charger control. However, the estimation calculation module, and optionally also the adaptation calculation module, will provide a frequency and amplitude matched to the disturbance ripple so that the effect on the battery voltage is such that the rectification voltage ripple is precisely cancelled.

It is not possible without arranging additional sensors, to directly measure the ripple on the rectified voltage, i.e. the DC voltage 8. However, it is possible to measure the three-phase voltage before rectification performed by the diode rectifier circuitry, i.e. measuring the Us. Based on this voltage, it is possible to estimate the amplitude, phase, and frequency of the ripple on the rectified voltage, i.e., the disturbance. The supply voltage applied to the battery charger is a three-phase voltage transformed down to a lower voltage, i.e. to the voltage level required to charge the batteries of the battery module. The three-phase voltage may vary both in amplitude and frequency over time, and so will hence also the disturbance ripple on the rectified voltage. The applied compensation needs to be very accurate in both phase and amplitude to work correctly, so, if these variations are measured, it will be possible to quickly adjust the ripple compensation based on feedforward control. This will allow a fast response, and arguably, the ripple suppression will become more robust.

Phase-locked loops are applied to extract frequency, phase and voltage of the three-phase supply voltage.

In the feed-forward solution implemented in the estimation calculation module, a delay in the system may be considered. A control ratio is calculated for each sample, and a specified predetermined delay may then be applied before the control ratio data is implemented in the physical system. The delay may be in the order of a few samples, e.g. in the range of 1-3 samples, and preferably 1.5 samples.

In one exemplary implementation, during normal operation, the battery charger device 2 disclosed herein is intended to charge the batteries of the battery module, and supply all DC-loads on the vehicle, e.g. a train (lights, doors, power to electronics etc.). When e.g. the train loses main power for some reason, the batteries will instead start to supply all DC-loads.

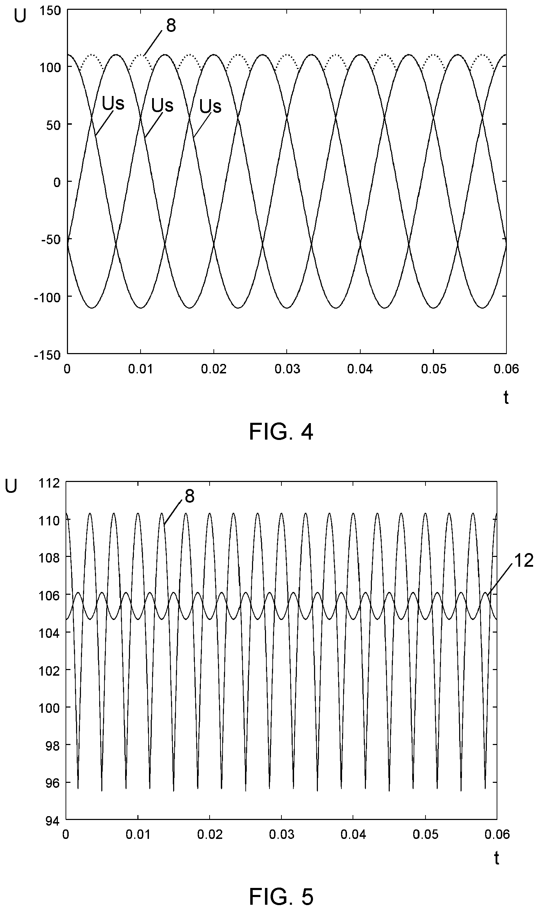

Figures 4 and 5 show diagrams of various voltages of a battery charger device. In the figures the vertical axes represent the voltage U in volts, and the horizontal axes represent time t in seconds. These figures show an implementation where the input AC voltage Us is a three-phase input supply voltage having a frequency of 50Hz.

Figure 4 shows the three phases of the supply voltage Us as solid lines. In addition, the rectified DC voltage 8 is shown as a dotted line. The variation of the rectified DC voltage is clearly shown. Figure 5 is an amplified illustration showing the variation of the DC voltage 8, and also the charging DC voltage 12 which has a remaining variation, a ripple, having a frequency of 300 Hz. As discussed above, the object of the present invention is to remove this ripple. It should be noted that the charging DC voltage 12 shown in figure 5, not is subjected to the ripple suppression as outlined herein.

According to one embodiments of the present invention, the AC supply voltage Us is a three-phase supply voltage, having a frequency of 50 Hz, resulting in a ripple having a frequency of 300 Hz.

According to another embodiment of the present invention, the AC supply voltage Us is a three-phase supply voltage, having a frequency of 60 Hz, resulting in a ripple having a frequency of 360 Hz.

According to an embodiment, the battery charger control unit 16 further comprises an adaptation calculation module 32 configured to calculate adaptation values 36, based upon the charging DC voltage UB and charging current IB. The adaptation calculation module 32 is configured to identify remaining ripple of the charging DC voltage UB, and the charging current IB, to determine the adaptation values which are applied to fine-tune the ripple suppression CR data, obtained by the estimation calculation module, to further attenuate said ripple, until the ripple is completely attenuated.

Preferably the battery charger control unit 16 comprises a modelling module, and wherein the adaptation values are applied to the modelling module that is configured to fine-tune the ripple suppression CR data by the adaptation values.

The battery charger control unit disclosed herein may be a separate control unit, or may be included in an overall controller for a vehicle where the battery charger device is mounted. The modules within the battery charger control unit may be implemented as software modules.

The circuitry of the battery charger device illustrated in figure 1, will now be described more in detail. R2, L1, D1, IGBTD and C1 together form the battery chopper circuitry 10 (also called boost converter). By turning the IGBT on/off with a given duty-cycle, which is included in the CR data of the control signal 14, the voltage out of the diode rectifier circuitry 6 (which is the low voltage side of boost converter) is increased to a higher regulated value in capacitor C1 (which is the high voltage side) suitable for charging the battery.

The boost converter roughly works as follows. An inductor is connected to the lowvoltage DC-source. When the IGBT is turned on, the inductor is essentially short-circuited over the input DC-voltage (by the diode rectifier) and hence the magnetic field in the inductor L1 starts storing energy and the current increases. When the IGBT is turned off, the current built up in the inductor L1 must go through the diode D1 instead of the IGBT and will hence increase the voltage in capacitor C 1. By controlling the IGBT on/off precisely, it is possible to regulate the voltage on the high-voltage side.

The control ratio CR = fraction of switch period the IGBT is on, and IGBT off: (1-CR) % of time.

Inductor L1 and resistance R2 are, in one exemplary implementation, really one physical inductor which will have both inductance and resistance. Both values are important for the operation. In the circuitry shown in figure 1, the components are ideal, so both are required to simulate the physical inductor. D1 is a diode which is part of the battery chopper circuitry. C1 is a capacitor in which the voltage is regulated at a given reference value, and IGBT acts as a switch.

An insulated-gate bipolar transistor (IGBT) is a three-terminal power semiconductor device primarily forming an electronic switch. It was developed to combine high efficiency with fast switching. Since it is designed to turn on and off rapidly, the IGBT can synthesize complex waveforms with pulse-width modulation and low-pass filters.

In conventional systems used today, a PWM signal is applied to the chopper based on the measured battery voltage and battery current. If the voltage is too low, the duty cycle of the PWM is increased, and vice versa, until the battery voltage agrees with its reference. In the presently used solutions, the control algorithm does not consider that the voltage from the rectifier contains a ripple. The control will reduce the ripple somewhat through feedback, but cannot eliminate the ripple completely. Most of the ripple is suppressed by the choice of hardware components in the step-up chopper (inductor, capacitor etc.) and the fact that the ripple is there is part of the hardware design.

According to the present invention, a ripple suppression algorithm is added to the battery charger control unit. All measurements needed for this are already available, so only a software modification is necessary.

As described herein, the effect of the rectification ripple on the battery voltage is suppressed by means of destructive interference. A similar ripple but opposite in phase is generated and added to the control signal, and the control induced ripple will then cancel the effect of the ripple from the rectification voltage. Adding an active control algorithm for suppressing the ripple saves the cost and problems with redesigning the hardware and is hence a cheaper and potentially also a more effective way to reduce the ripple.

The present invention is not limited to the above-described preferred embodiments. Various alternatives, and modifications may be used. Therefore, the above embodiments should not be taken as limiting the scope of the invention, which is defined by the appending claims.

## Claims

1. A battery charger device (2) for charging batteries in a battery module (4), particularly for charging lithium ion batteries, comprising:
- a diode rectifier circuitry (6), configured to receive an AC supply voltage Us, to rectify said supply voltage, and to generate a DC voltage (8) in dependence thereto;
- a battery chopper circuitry (10), configured to receive said DC voltage (8), and to generate a charging DC voltage (12), having a voltage UB, and a current IB, applicable to be applied to said battery module (4) and to charge said batteries, in dependence of control ratio (CR) data of a control signal (14), and
- a battery charger control unit (16) comprising a main control module (18) that is configured to calculate and to generate a main control signal comprising main CR data (19), wherein said battery charger control unit (16) is configured to receive measurement values (22) representing at least the supply voltage Us, the charging DC voltage UB, the charging current IB, and a charging reference DC voltage UBref, and a maximum charging current IBmax, being the target voltage value and the maximum current value, respectively, of the batteries to be charged, wherein said main control module (18) is configured to calculate said main CR data (19) such that said battery chopper circuitry (10) is controlled to generate a charging DC voltage UB being, or being close to, said charging reference DC voltage UBref, **characterized in that** the battery charger control unit (16) further comprises:
- an estimation calculation module (24) configured to calculate estimated values (26) of the amplitude, phase, and frequency of a ripple on the DC voltage (8), where the ripple being a disturbance superimposed on the DC voltage (8), based upon the frequency, and amplitude of said supply voltage Us, and to determine ripple CR data in dependence of said estimated values, and to determine ripple suppression CR data (30) being the ripple CR data but having an opposite phase as the ripple CR data, wherein the battery charger control unit (16) is configured to determine a control signal (14) including said main CR data (19) combined with said ripple suppression CR data (30), where said ripple suppression CR data (30) being superimposed on said main CR data, and to apply said control signal (14) to said battery chopper circuitry (10).

2. The battery charger device (2) according to claim 1, wherein said battery charger control unit (16) further comprises an adaptation calculation module (32) configured to calculate adaptation values (36), based upon said charging DC voltage UB and charging current IB, wherein said adaptation calculation module (32) is configured to identify remaining ripple of the charging DC voltage UB and the charging current IB to determine said adaptation values which are applied to fine-tune said ripple suppression CR data, obtained by said estimation calculation module, to further attenuate said ripple, until the ripple is completely attenuated.

3. The battery charger device (2) according to claim 2, wherein said battery charger control unit (16) comprises a modelling module, and wherein said adaptation values are applied to the modelling module that is configured to fine-tune said ripple suppression CR data by said adaptation values.

4. The battery charger device (2) according to any preceding claim, wherein the estimation calculation module (24) comprising at least one phase-locked loop configured to calculate estimated values (26) of the amplitude, phase, and frequency of the ripple on the DC voltage (8).

5. The battery charger device (2) according to any of claims 1-4, wherein said AC supply voltage Us is a three-phase supply voltage, having a frequency of 50 Hz, resulting in a ripple having a frequency of 300 Hz.

6. The battery charger device (2) according to any of claims 1-4, wherein said AC supply voltage Us is a three-phase supply voltage, having a frequency of 60 Hz, resulting in a ripple having a frequency of 360 Hz.
